(19) Europäisches Patentamt
European Patent Office
Office européen des brevets

(11) **EP 1 479 233 B1**

(12) **FASCICULE DE BREVET EUROPEEN**

(45) Date de publication et mention de la délivrance du brevet:
**20.11.2013 Bulletin 2013/47**

(21) Numéro de dépôt: **03720632.3**

(22) Date de dépôt: **21.02.2003**

(51) Int Cl.:
***H04N 7/16*** *(2011.01)* ***H04N 7/167*** *(2011.01)*

(86) Numéro de dépôt international:
**PCT/FR2003/000582**

(87) Numéro de publication internationale:
**WO 2003/073760 (04.09.2003 Gazette 2003/36)**

(54) **DISPOSITIF DE TRAITEMENT ET PROCEDE DE TRANSMISSION DE DONNEES CHIFFREES POUR UN PREMIER DOMAINE DANS UN RESEAU APPARTENANT A UN SECOND DOMAINE**

VERARBEITUNGSVORRICHTUNG UND ÜBERTRAGUNGSVERFAHREN FÜR DATEN, DIE FÜR EINEN ERSTEN BEREICH VERSCHLÜSSELT SIND, IN EINEM NETZWERK, WELCHES ZU EINEM ZWEITEN BEREICH GEHÖRT

DEVICE FOR PROCESSING AND METHOD FOR TRANSMISSION OF ENCODED DATA FOR A FIRST DOMAIN IN A NETWORK PERTAINING TO A SECOND DOMAIN

(84) Etats contractants désignés:
**DE ES FR GB IT**

(30) Priorité: **25.02.2002 FR 0202329**

(43) Date de publication de la demande:
**24.11.2004 Bulletin 2004/48**

(73) Titulaire: **Thomson Licensing**
**92130 Issy-les-Moulineaux (FR)**

(72) Inventeurs:
- **DURAND, Alain**
  **F-35000 Rennes (FR)**
- **LELIEVRE, Sylvain**
  **F-35760 Montgermont (FR)**
- **LAURENT, Christophe**
  **F-35630 Vignoc (FR)**

(74) Mandataire: **Kohrs, Martin**
**Technicolor**
**1-5 rue Jeanne d'Arc**
**92130 Issy-les-Moulineaux (FR)**

(56) Documents cités:
**EP-A- 0 858 184** **EP-A1- 0 810 754**
**WO-A-00/56068** **WO-A-00/62505**
**WO-A1-01/55850** **US-A- 6 081 601**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

Domaine de l'invention

La présente invention concerne le domaine de la protection contre la copie de données numériques et contre l'accès illégal à de telles données, en particulier dans le cas de données circulant dans des réseaux numériques locaux tels des réseaux domestiques numériques.

Etat de la technique

Il est connu dans le contexte de la protection contre la copie illicite de données numériques des systèmes dans lesquels un contenu numérique peut être copié pour être utilisé dans un domaine déterminé. On entend par domaine un ensemble d'appareils appartenant par exemple à un même réseau domestique, ces appareils partageant un secret propre au domaine, par exemple une clé de chiffrement cryptographique. Un appareil appartenant à un domaine peut être un appareil portable. Son appartenance à un domaine particulier sera déterminée par sa connaissance du secret propre à ce domaine particulier.

Les contenus numériques dans un tel domaine peuvent être de trois sortes :

- « copie libre» : ce type de contenu peut être enregistré et relu dans n'importe quel domaine, il n'est donc pas nécessaire de connaître un secret propre à un domaine pour lire ce type de contenu ;
- « copie privée» : ce type de contenu ne peut être copié que pour un domaine particulier dans lequel il pourra être relu ; le contenu est enregistré sous une forme qui nécessite la connaissance du secret du domaine particulier pour pouvoir être relu. Ce type de contenu ne peut pas être lu sur un appareil qui n'appartient pas au domaine particulier.
- « lecture seule » : ce type de contenu peut seulement être lu dans un domaine particulier mais il ne peut pas être copié ; ou si des copies du contenu sont effectuées, celles-ci ne pourront pas être relues ensuite.

Un contenu numérique entre généralement dans un domaine à travers un dispositif d'accès ou dispositif source. Ce type de dispositif récupère des données numériques à travers un canal externe au domaine et les diffuse aux autres dispositifs du domaine, par exemple grâce à un bus numérique reliant les différents appareils du domaine. Un dispositif source peut notamment être un décodeur numérique destiné à recevoir des programmes vidéo de l'extérieur d'un réseau domestique numérique, via une antenne satellite ou une connexion au câble, pour les diffuser dans le réseau. Il peut également s'agir d'un lecteur de disque optique diffusant dans un réseau domestique des données (audio et/ou vidéo) lues sur un disque optique (le disque contient dans ce cas des données provenant de l'extérieur du réseau).

A l'intérieur du domaine, les contenus numériques peuvent être enregistrés par des dispositifs d'enregistrement numériques, tels un enregistreur DVD (de l'anglais « Digital Versatile Disc » signifiant littéralement « Disque Polyvalent Numérique ») ou un disque dur.

Finalement, le contenu est présenté aux utilisateurs du domaine par des dispositifs de présentation. Ces dispositifs sont adaptés à recevoir les contenus du domaine (notamment les données numériques circulant dans un réseau domestique numérique) pour les traiter (notamment pour les décrypter si nécessaire) et les présenter à l'utilisateur final. Il s'agit notamment de récepteurs de télévision permettant de visualiser des données vidéo ou d'appareils Hi-Fi pour écouter des données audio.

Un dispositif source contient généralement un module dit « d'accès conditionnel » ou un module de gestion des droits numériques (dit « module DRM » pour « Digital Rights Management ») selon que le contenu est respectivement un contenu « diffusé » (« broadcast content » en anglais) ou un contenu « large bande » (« broadband content » en anglais). Ces modules gèrent la protection du contenu mise en place par le fournisseur de contenu.

Par exemple, si l'on considère des programmes télévisés payants, le fournisseur de contenu, c'est à dire le diffuseur de programmes, fournit habituellement les programmes numériques sous une forme embrouillée (c'est à dire cryptée) à l'aide de clés appelées mots de contrôle, les mots de contrôle étant eux-mêmes transmis avec les données sous forme chiffrée dans des messages appelés « ECM » (de l'anglais « Entitlement Control Message » signifiant littéralement « Message de Contrôle des Droits »). Le fournisseur de contenu fournit également aux abonnés ayant payé pour recevoir les programmes la clé permettant de déchiffrer les mots de contrôle et un module d'accès conditionnel contenant, entre autre, l'algorithme de déchiffrement des mots de contrôle (la clé et le module d'accès conditionnel sont préférentiellement inclus dans une carte à puce). C'est aussi le fournisseur de contenu qui définit les règles d'utilisation du contenu fourni, c'est à dire qui définit si le contenu est du type « copie libre », « copie privée » ou « lecture seule ».

Dans le système de protection contre la copie connu sous le nom de *SmartRight*™ (*SmartRight* est une marque déposée de la société THOMSON multimedia), les dispositifs sources transforment les contenus reçus en fonction des règles d'utilisation de ces contenus.

Lorsqu'un contenu reçu par un dispositif source d'un domaine donné est de type « copie privée », le contenu est transformé de manière à ce qu'il ne puisse être décrypté que par des dispositifs de présentation appartenant à ce domaine particulier (et donc partageant tous un même secret). La demande de brevet français No. 01 05568, déposée le 25 avril 2001 au nom du demandeur THOMSON Licensing S.A., concernant un procédé de gestion de clé symétrique dans un réseau de communication, décrit notamment comment cette transformation est effectuée de sorte que seuls les dispositifs de présentation connaissant une clé secrète du réseau de communication sont capables de décrypter le contenu pour le lire.

On notera que, dans la suite de la description, les termes «clé secrète » ou «clé symétrique » seront utilisés pour désigner une clé cryptographique utilisée dans un algorithme de chiffrement ou de déchiffrement symétrique, tel que l'algorithme connu sous le nom de AES (acronyme de « Advanced Encryption Standard ») ou encore sous le nom de « Rijndael» et décrit notamment dans le document « Proceedings from the first Advanced Encryption Standard Candidate Conference, National Institute of Standards and Technology (NIST), août 1998, J. Daemen et V. Rijmen».

Lorsqu'un contenu reçu par un dispositif source est de type « lecture seule », le contenu est également transformé par ce dispositif source en utilisant le procédé décrit dans la demande de brevet précitée de sorte qu'il ne puisse être lu que par les dispositifs de présentation du réseau qui connaissent la clé secrète du réseau. De plus, un procédé décrit dans la demande de brevet français No. 00 15894, déposée le 7 décembre 2000 au nom de THOMSON multimedia, est mis en oeuvre pour que le contenu ne puisse pas être copié dans le domaine ou qu'en cas de copie, celle-ci ne puisse pas être relue par les dispositifs de présentation du domaine.

Lorsqu'un contenu reçu dans un domaine est de type « copie libre », il est généralement en clair et est laissé sous cette forme par le dispositif source qui a reçu le contenu pour le diffuser dans le domaine.

Grâce à ce système, il est possible à un utilisateur qui reçoit un contenu après avoir payé au fournisseur de ce contenu les droits associés, de garder une copie privée de ce contenu pour son usage personnel ultérieur. Cette copie ne pourra être lue que par des dispositifs de présentation de son domaine, c'est à dire du domaine dans lequel le contenu a été reçu initialement.

US 6081601, WO 00/56068, et WO 00/62505 décrivent des systèmes dans lesquels des données d'un premier domaine sont reçues d'un dispositif à la frontière entre le premier domaine et un second domaine. Le dispositif 'traduit' les données chiffrées selon le procédé du premier domaine pour qu'elles soient accessibles dans le second domaine. Ces solutions nécessitent cependant que les données soient envoyées du premier domaine au second domaine.

Néanmoins, il existe des cas dans lesquels il est souhaitable de pouvoir relire une copie privée effectuée dans un premier domaine sur un dispositif de présentation d'un second domaine. Notamment, si un utilisateur souhaite visualiser sur le domaine d'un ami la copie d'un film effectuée sur son propre domaine, naturellement sans qu'une copie puisse être réalisée pour le domaine de l'ami.

Ceci peut également être nécessaire en cas d'union ou de séparation d'utilisateurs. En cas d'union, si chaque utilisateur avait auparavant son propre domaine, les deux domaines ne pourront être reliés ensemble car les appareils des deux domaines ne partagent pas le même secret. Dans ce cas, si les deux utilisateurs ne veulent pas gérer deux domaines différents, il faudra que les contenus enregistrés au préalable sur un premier domaine puissent être relus sur le deuxième domaine. De même, lorsque l'on souhaite séparer un domaine en deux domaines différents (parce que des époux se séparent ou qu'un enfant quitte le domicile de ses parents), il est nécessaire de pouvoir relire les contenus enregistrés au préalable sur le domaine commun sur les deux nouveaux domaines.

La présente invention vise à résoudre les problèmes précités.

Exposé de l'invention

L'invention est définie par le jeu de revendications.

Brève description des dessins

D'autres caractéristiques et avantages de l'invention apparaîtront à travers la description de modes de réalisation particuliers non limitatifs, explicités à l'aide des figures jointes, parmi lesquelles :

- la figure 1 est un schéma bloc d'un réseau domestique numérique raccordant entre eux des dispositifs appartenant à un premier domaine ;
- la figure 2 est un schéma bloc d'un réseau domestique comportant des dispositifs appartenant à un second domaine illustrant le premier mode de réalisation de l'invention ;
- la figure 3 est un diagramme temporel illustrant des échanges de clés entre deux dispositifs du réseau domestique de la figure 2 selon le premier mode de réalisation de l'invention ;
- les figures 4A et 4B sont des diagrammes temporels illustrant les échanges de données entre des dispositifs du réseau domestique de la figure 2 permettant de lire (sans le copier) dans le second domaine, un contenu enregistré dans le premier domaine ;

- les figures 5 et 6 sont des schémas blocs de réseaux domestiques illustrant un second et un troisième mode de réalisation de l'invention.

Description détaillée de modes de réalisation de l'invention

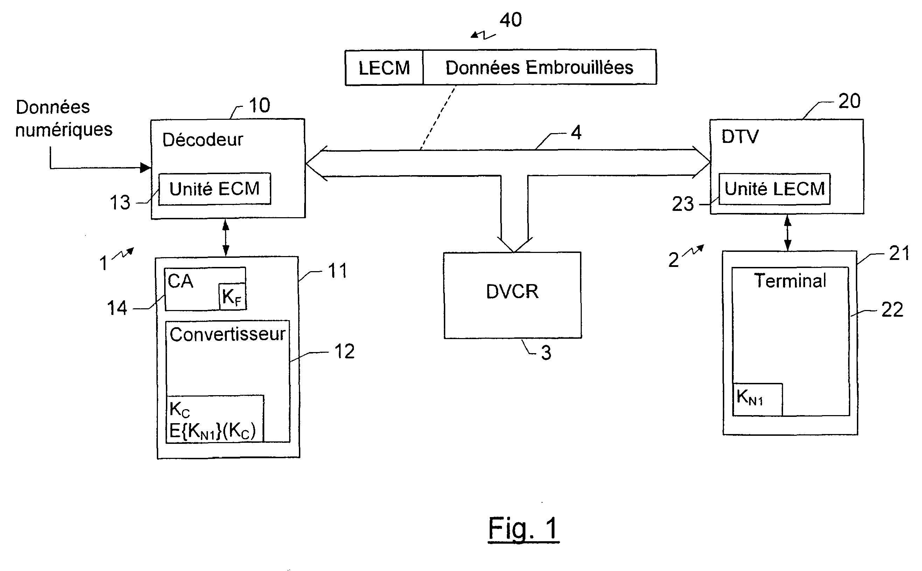

Nous décrirons dans un premier temps, en liaison avec la figure 1, un exemple de réseau domestique dans lequel est mis en oeuvre un système de protection contre la copie permettant d'effectuer des copies privées des contenus numériques, pour un usage futur uniquement dans le réseau domestique dans lequel ils ont été copiés.

Le réseau comprend un dispositif source 1, un dispositif de présentation 2 et un dispositif d'enregistrement 3 reliés ensembles par un bus numérique 4, qui est par exemple un bus selon la norme IEEE 1394.

Le dispositif source 1 comprend un décodeur numérique 10 doté d'un lecteur de carte à puce muni d'une carte à puce 11. Ce décodeur reçoit des données numériques, notamment des programmes audio/vidéo distribués par un prestataire de service.

Le dispositif de présentation 2 comprend un récepteur de télévision numérique (DTV) 20 doté d'un lecteur de carte à puce muni d'une carte à puce 21 et le dispositif d'enregistrement 3 est notamment un magnétoscope numérique (DVCR).

Les données numériques qui entrent sur le réseau via le dispositif source 1 sont en général des données embrouillées par un fournisseur de contenu, par exemple selon le principe de la télévision payante. Dans ce cas, les données sont embrouillées à l'aide de mots de contrôle CW (de l'anglais « Control Word ») qui sont eux-même transmis dans le flux de données sous forme chiffrée à l'aide d'une clé de chiffrement $K_F$ en étant contenus dans des messages de contrôle ECM (de l'anglais « Entitlement Control Message »). La clé de chiffrement $K_F$ est mise à la disposition des utilisateurs qui ont payé pour recevoir les données, notamment en étant stockée dans une carte à puce. Dans l'exemple de la figure 1, la carte à puce 11 contient une telle clé $K_F$ ainsi qu'un module d'accès conditionnel CA 14 capable de déchiffrer les mots de contrôle CW.

Le dispositif source 1 qui reçoit ces données numériques embrouillées les met ensuite en forme pour qu'elles soient diffusées sur le réseau numérique selon un format de protection spécifique au réseau domestique. Le décodeur 10 comporte un module « unité ECM » 13 qui extrait du flux de données reçu les messages ECM contenant les mots de contrôle chiffrés à l'aide de la clé $K_F$ pour les transmettre au module CA 14. Celui-ci déchiffre les mots de contrôle CW et les transmet à un module convertisseur 12 également contenu dans la carte à puce 11.

Le rôle du module convertisseur 12 est de transformer les informations contenues dans les messages ECM en messages LECM (de l'anglais « Local Entitlement Control Message ») protégés à l'aide d'une clé secrète spécifique au réseau domestique local, que l'on appellera la clé $K_{N1}$.

On suppose qu'auparavant le module convertisseur a généré aléatoirement une clé symétrique $K_C$ et a requis le chiffrement de cette clé $K_C$ à l'aide de la clé secrète du réseau $K_{N1}$. Le module convertisseur possède donc en mémoire la clé $K_C$ et la clé $K_C$ chiffrée par la clé secrète du réseau $K_{N1}$ : $E\{K_{N1}\}(K_C)$.

Dans le reste de la description, on utilisera toujours la notation $E\{K\}(M)$ pour signifier chiffrement avec une clé K des données M.

La demande de brevet français No. 01 05568 précitée décrit en détail le procédé qui permet au module convertisseur d'obtenir le chiffrement de la clé $K_C$ à l'aide de la clé secrète du réseau $K_{N1}$, ce chiffrement étant effectué dans un dispositif de présentation. En effet, les dispositifs de présentation du réseau, tels que le dispositif 2 de la figure 1, sont les seuls à posséder la clé secrète du réseau $K_{N1}$. Celle-ci est contenue dans la carte à puce 21 avec un module terminal 22 chargé, entre autre, des opérations de chiffrement et déchiffrement avec la clé du réseau $K_{N1}$.

Le fonctionnement du système est le suivant. Lorsque des données numériques sont reçues dans le décodeur 10, le module « unité ECM » 13 extrait les messages ECM contenant les mots de contrôle CW chiffrés à l'aide de la clé $K_F$ spécifique au fournisseur de contenu et les fournit au module CA 14. Ce dernier déchiffre les mots de contrôle CW et les transmet au module convertisseur 12. De plus, le message ECM peut également contenir des informations de contrôle de la copie du contenu transmis indiquant si le contenu peut être copié librement ou non dans le réseau ou bien si le contenu peut seulement être visualisé (ou écouté...) dans le réseau. Ces informations sont également transmises au module convertisseur.

Le module convertisseur construit ensuite un message LECM à partir de ces données. Ce message comprend préférentiellement :

- une partie A en clair contenant notamment les informations de contrôle de la copie du contenu, c'est à dire indiquant si le contenu est de type « copie libre », « copie privée » ou bien « lecture seule » ; ces informations sont souvent notées VCI (acronyme de l'anglais « Viewing Control Information »). La partie en clair contient également la clé $K_C$ chiffrée avec la clé du réseau : $-E\{K_{N1}\}(K_C)$.
- une partie B, chiffrée avec la clé $K_C$, et contenant essentiellement le mot de contrôle déchiffré CW ; on peut résumer cette partie à : $E\{K_C\}(CW)$.

- un champ d'intégrité formé par le résultat d'une fonction de hachage appliquée à l'ensemble des parties A et B avant chiffrement de la partie B. Ce champ d'intégrité permet avantageusement de vérifier la validité des messages LECM et permet de s'assurer qu'ils ne sont pas modifiés illicitement.

Le message LECM est ensuite transmis à l'unité ECM qui l'insère dans le flux de données à la place des messages ECM. Il est à noter que lorsque le contenu reçu n'est pas déjà sous forme embrouillée comme décrit ci-dessus et ne contient pas de message ECM, le module convertisseur 12 est chargé dans ce cas de mettre les données sous cette forme pour que le flux de données diffusé sur le réseau 4 soit toujours sous la forme de paquets de données tels le paquet 40 représenté à la figure 1 contenant un message LECM et des données embrouillées.

On peut résumer le contenu de ce paquet comme suit :

$$LECM \mid E\{CW\}(<\text{données}>)\ ;$$

soit :

$$E\{K_{N1}\}(K_C)|VCI|E\{K_C\}(CW)|\text{Champ d'intégrité} \mid E\{CW\}(<\text{données}>)\ ;$$

où « | » représente l'opérateur de concaténation.

Lorsque ces paquets de données sont reçus par le récepteur de télévision numérique 20, ils sont transmis au module « Unité LECM » 23 qui en extrait les messages LECM pour les transmettre au module terminal 22. Ce dernier déchiffre tout d'abord $E\{K_{N1}\}(K_C)$ à l'aide de la clé $K_{N1}$ pour obtenir la clé $K_C$. Ensuite, à l'aide de la clé $K_C$, il déchiffre $E\{K_C\}(CW)$ pour obtenir le mot de contrôle CW qu'il transmet au module « Unité LECM » 23. Celui-ci est alors en mesure de désembrouiller les données E{CW}(<données>) à l'aide du mot de contrôle. Les données désembrouillées sont ensuite présentées à l'utilisateur. Dans le cas de données vidéo, celles-ci peuvent être visualisées sur le récepteur de télévision 20.

Si le flux de données contenant les paquets 40 est enregistré par le magnétoscope numérique 3 pour être relu plus tard, nous constatons que ceci n'est possible que si le dispositif de présentation sur lequel les données doivent être présentées contient la clé secrète $K_{N1}$ du domaine dans lequel les données ont été enregistrées. Nous appellerons dans la suite ce domaine N1.

Rappelons que nous entendons par domaine, dans l'exemple de la figure 1, le réseau domestique numérique ainsi que l'ensemble des appareils qui y sont connectés ainsi également que des appareils de présentation portables (non représentés) qui sont susceptibles d'être raccordés au réseau domestique et qui appartiennent aux membres de la famille possédant le réseau domestique. Les appareils de présentation portables (par exemple des lecteurs de fichiers musicaux compressés) sont considérés comme faisant partie du domaine N1 lorsqu'ils contiennent la clé secrète $K_{N1}$. On pourra se reporter à la demande de brevet français No. 01 05568 précitée pour y trouver une description de la manière dont la clé secrète du domaine N1 est transmise aux nouveaux dispositifs de présentation qui « entrent » dans le domaine (par exemple lorsqu'un membre de la famille achète un nouvel appareil).

Supposons maintenant qu'un utilisateur ayant enregistré un contenu (par exemple un film) de type « copie privée » sur son domaine N1 souhaite pouvoir le visualiser sur un récepteur de télévision appartenant à un autre domaine que nous noterons N2.

Dans ce cas, l'utilisateur insérera par exemple une cassette contenant le film dans un magnétoscope numérique du domaine N2. Ce magnétoscope diffusera le film sur le réseau domestique du domaine N2 pour qu'il soit visualisé sur un récepteur de télévision du domaine N2. Mais comme ce dernier ne connaît pas la clé secrète du domaine N1, $K_{N1}$, il ne pourra déchiffrer le contenu des messages LECM et donc ne pourra pas désembrouiller les données pour présenter le film à l'utilisateur.

Selon le principe de l'invention, pour pouvoir visualiser dans le domaine N2 le contenu enregistré comme « copie privée » dans le domaine N1, le contenu va être converti en contenu de type « lecture seule » pour le domaine N2.

Nous décrirons ci-dessous plusieurs modes de réalisation permettant de réaliser cette conversion.

Nous allons tout d'abord décrire le principe général qui va être utilisé dans les différents modes de réalisation.

Pour cela, nous avons besoin d'un dispositif que nous appellerons M pour réaliser la conversion. Ce dispositif doit contenir le secret du domaine N1, à savoir la clé $K_{N1}$, et doit être installé sur le domaine N2 avant de pouvoir faire la conversion. Le dispositif M doit comporter un module terminal équivalent à un module terminal d'un dispositif de présentation du domaine N1 et un module convertisseur équivalent à un module convertisseur d'un dispositif source du domaine N2 pour pouvoir convertir le contenu pour le domaine N2.

Ce dispositif M, une fois relié au réseau domestique du domaine N2, doit d'abord générer une clé symétrique

$K'_C$ et la faire chiffrer à l'aide de la clé secrète du domaine N2, $K_{N2}$, pour obtenir $E\{K_{N2}\}(K'_C)$. Ensuite, lorsqu'il reçoit le contenu diffusé par le magnétoscope numérique du domaine N2, il remplace les messages LECM1 contenant :

$$E\{K_{N1}\}(K_C) \mid VCI \mid E\{K_C\}(CW) \mid \text{Champ d'intégrité},$$

avec VCI contenant le code « copie privée », par des messages LECM2 contenant :

$$E\{K_{N2}\}(K'_C) \mid VCI \mid E\{K'_C\}(CW) \mid \text{Champ d'intégrité},$$

avec VCI contenant le code « lecture seule » et il rediffuse ce contenu qui peut ainsi être déchiffré par un récepteur de télévision du domaine N2 contenant la clé secrète $K_{N2}$.

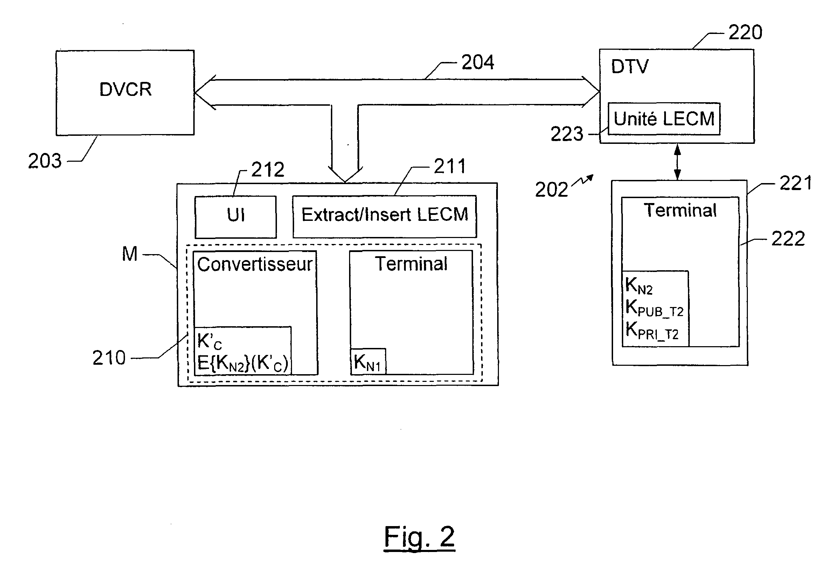

Sur la figure 2, nous avons représenté schématiquement le réseau domestique numérique d'un domaine N2 dans lequel est mis en oeuvre un premier mode de réalisation de l'invention. Nous n'avons représenté que les éléments nécessaires à la compréhension de l'invention.

Dans ce réseau, un bus numérique 204 relie entre eux un magnétoscope numérique 203, un dispositif de présentation 202 et un dispositif M provenant d'un domaine N1. Le bus numérique 204 est préférentiellement un bus selon la norme IEEE 1394. Le dispositif de présentation 202 comprend un récepteur de télévision numérique DTV 220 qui comporte un module « Unité LECM » 223 et une carte à puce 221 comprenant un module terminal 222. Dans la carte à puce 221 est mémorisée la clé secrète du domaine N2 : $K_{N2}$.

Le dispositif M est par exemple un appareil portable contenant un module terminal/convertisseur 210 qui peut être soit un module intégré dans un processeur sécurisé de l'appareil M, soit un module amovible, contenu dans une carte à puce, elle-même insérée dans l'appareil M. Le module terminal/convertisseur 210 met en oeuvre les fonctionnalités des modules convertisseur et terminal tels qu'elles ont été décrites en liaison avec la figure 1. Le dispositif M contient aussi un module « Extract/Insert LECM » 211 dont le fonctionnement sera explicité ci-dessous.

Le dispositif M comporte également une interface utilisateur UI 212 qui permet à l'utilisateur de le configurer comme dispositif de présentation ou comme dispositif source selon le domaine dans lequel il se trouve.

Dans un premier temps, le dispositif M doit être initialisé dans le domaine N1 pour recevoir la clé secrète $K_{N1}$. On suppose donc, qu'avant d'être raccordé au réseau du domaine N2, le dispositif M a été au préalable raccordé au réseau du domaine N1 en tant que dispositif de présentation portable « vierge », c'est à dire n'appartenant à aucun domaine. Le dispositif M a ensuite reçu du dispositif « géniteur » du domaine N1 la clé secrète $K_{N1}$ avant de devenir « stérile ».

Les termes « vierge », « géniteur » et « stérile » sont définis dans la demande de brevet français No. 01 05568 précitée et désignent respectivement un dispositif de présentation (ou plus précisément son module terminal) :

- qui n'est raccordé à aucun domaine et ne contient aucune clé secrète de domaine (dispositif « vierge ») ;
- qui possède la clé secrète d'un domaine et peut la transmettre à un nouveau dispositif de présentation vierge susceptible d'être raccordé au domaine (dispositif « géniteur ») ; et
- qui possède la clé secrète d'un domaine mais ne peut pas la transmettre à un autre dispositif (dispositif « stérile »).

La demande de brevet précitée décrit également les mécanismes de transmission sécurisée de la clé secrète entre les différents dispositifs.

Le dispositif M peut ensuite être raccordé à un domaine N2 dans lequel on souhaite visualiser un contenu enregistré comme « copie privée » dans le domaine N1. Il est dans ce cas raccordé au réseau du domaine N2 comme dispositif source.

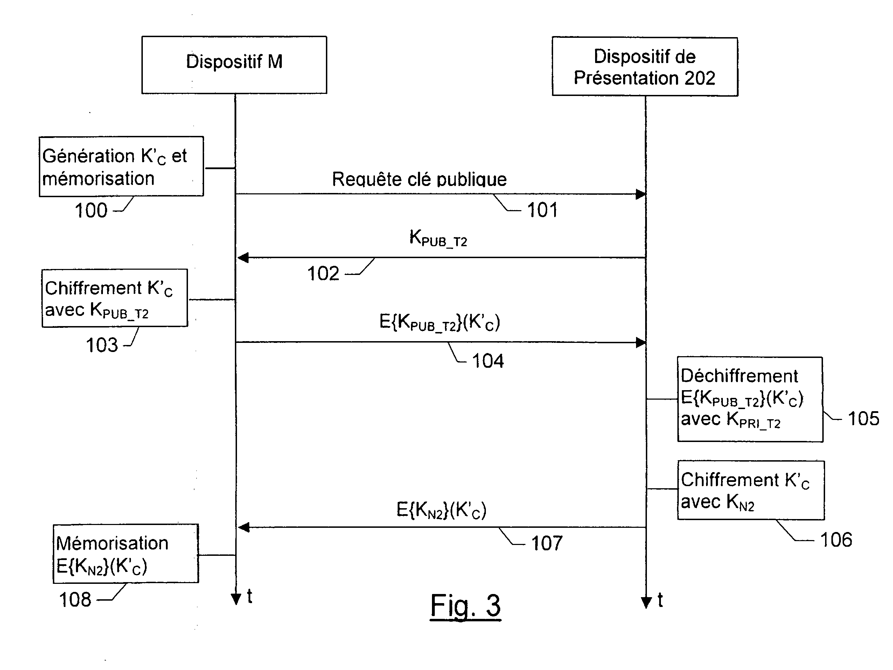

La figure 3 illustre les étapes qui sont mises en oeuvre après que le dispositif M a été raccordé au réseau du domaine N2.

Lors d'une première étape 100, une clé symétrique $K'_C$ est générée aléatoirement par le module convertisseur du dispositif M et est mémorisée par le dispositif. On parlera dans la suite tantôt du module convertisseur, tantôt du module terminal du dispositif M selon que le module terminal/convertisseur 210 met en oeuvre des fonctionnalités habituellement mises en oeuvre par un module convertisseur ou par un module terminal.

Lors de l'étape suivante 101, le dispositif M diffuse sur le réseau du domaine N2 un message de requête pour recevoir une clé publique d'un dispositif de présentation du réseau. Chaque dispositif de présentation possède en effet une paire de clés asymétriques mémorisée dans la carte à puce qui contient le module terminal. Par exemple, le dispositif de présentation 202 de la figure 2 possède une clé publique $K_{PUB_T2}$ et une clé privée $K_{PRI_T2}$. Ces clés sont utilisées de manière connue en soi pour réaliser des opérations de chiffrement ou de déchiffrement à l'aide d'algorithmes cryptographiques asymétriques (par exemple l'algorithme RSA, du nom de ses créateurs Rivest, Shamir et Adleman).

N'importe quel dispositif de présentation du domaine N2 peut répondre à cette requête 101. On suppose dans la suite que le dispositif de présentation 202 répond à la requête en envoyant sa clé publique $K_{PUB_T2}$ au dispositif M lors de l'étape 102.

Le module convertisseur du dispositif M réalise alors le chiffrement de la clé symétrique $K'_C$ à l'aide de la clé publique $K_{PUB_T2}$ reçue (étape 103) puis il envoie le résultat de ce chiffrement $E\{K_{PUB_T2}\}(K'_C)$ au dispositif de présentation 202 (étape 104). Ce dernier déchiffre le résultat reçu à l'aide de sa clé privée $K_{PRI-T2}$ pour obtenir $K'_C$ (étape 105). Il procède ensuite (étape 106) au chiffrement de $K'_C$ avec la clé secrète du domaine N2, $K_{N2}$, pour obtenir $E\{K_{N2}\}(K'_C)$, résultat qu'il envoie au dispositif M à l'étape 107. Le dispositif M mémorise ce résultat $E\{K_{N2}\}(K'_C)$ à l'étape suivante 108.

Le dispositif M est maintenant prêt à recevoir un contenu de type « copie privée » du domaine N1 pour le convertir en contenu de type « lecture seule » pour le domaine N2.

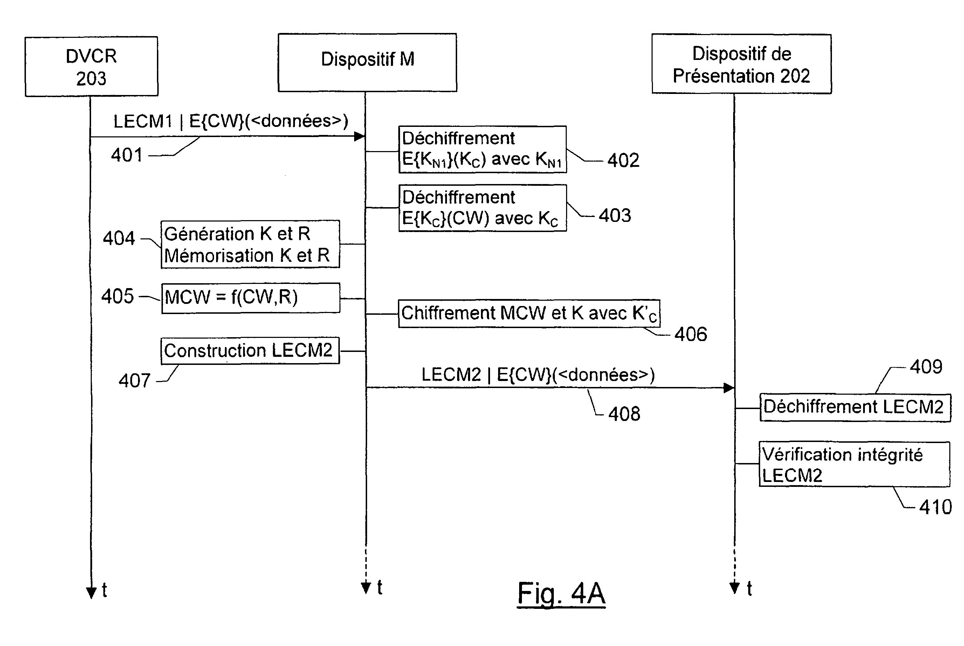

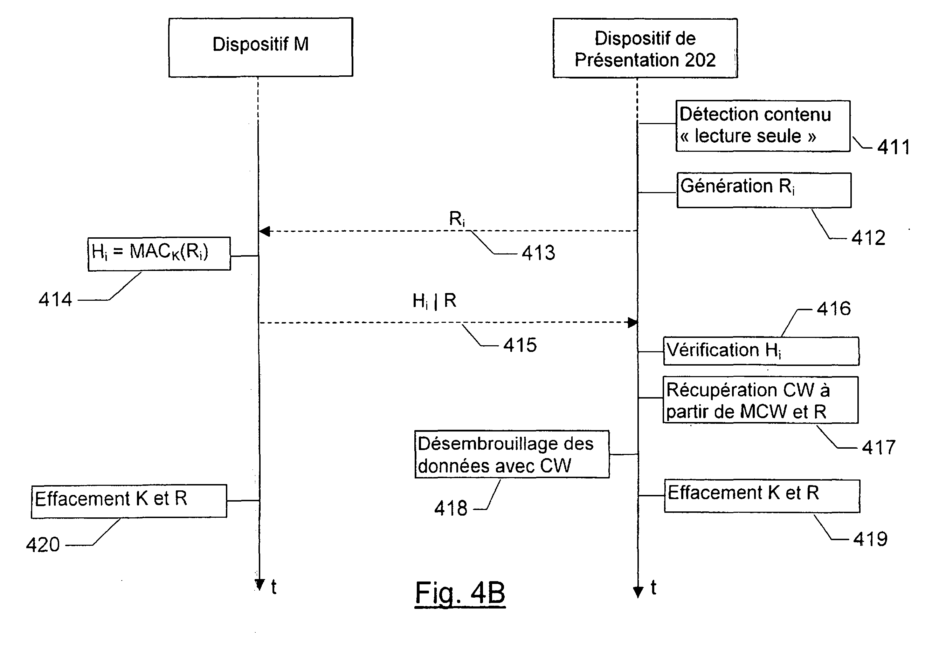

Nous allons maintenant décrire, en liaison avec la figure 4, comment cette conversion est effectuée.

Sur la figure. 4 (découpée en deux figures 4A et 4B sur les dessins annexés), on a représenté par trois axes verticaux descendants t l'axe du temps pour illustrer les traitements effectués par le magnétoscope numérique DVCR 203, le dispositif M et le dispositif de présentation 202 ainsi que les échanges entre ces dispositifs lorsqu'un nouveau contenu provenant du domaine N1 est diffusé sur le réseau domestique numérique du domaine N2.

Dans un premier temps, l'utilisateur insère par exemple la cassette vidéo contenant le programme vidéo enregistré dans le domaine N1, dans le magnétoscope numérique 203 du domaine N2. Le magnétoscope diffuse alors sur le réseau du domaine N2 les données enregistrées sur la cassette à destination du dispositif M. Cette diffusion est effectuée en utilisant un canal particulier du réseau, qui est soit prédéfini, soit choisi par l'utilisateur. Le dispositif M est réglé sur le même canal pour recevoir les données diffusées.

Ces données diffusées à l'étape 401 de la figure 4 contiennent des paquets de données tels que le paquet suivant :

$$\text{LECM1} \mid E\{CW\}(\text{<données>}),$$

soit

$$E\{K_{N1}\}(K_C)|CP|E\{K_C\}(CW)|\text{Champ d'intégrité} \mid E\{CW\}(\text{<données>}),$$

avec « CP » correspondant au code « copie privée » des informations « VCI ».

Lorsque ces paquets de données sont reçus dans le dispositif M, le module « Extract/Insert LECM » 211 extrait les messages LECM1 des paquets de données et les transmet au module terminal du dispositif M. Ce dernier effectue d'abord le déchiffrement de $E\{K_{N1}\}(K_C)$ avec la clé $K_{N1}$ pour obtenir la clé $K_C$ à l'étape 402. Il effectue ensuite le déchiffrement de $E\{K_C\}(CW)$ avec la clé $K_C$ obtenue à l'étape précédente pour obtenir le mot de contrôle CW à l'étape 403 et le mot de contrôle est transmis au module convertisseur.

Ensuite, le contenu doit être converti en contenu de type « lecture seule » pour le domaine N2 par le module convertisseur du dispositif M. Les étapes suivantes sont donc effectuées par le module convertisseur de M :

> A l'étape 404, il génère deux nombres aléatoires R et K. Ces nombres sont préférentiellement générés par un générateur de nombres pseudo-aléatoires bien connu en soi. Le nombre R sera utilisé comme clé de masquage éphémère des mots de contrôle et sera appelé « clé de masquage » dans la suite de la description. Le nombre K constitue quant à lui une clé éphémère d'authentification que l'on appellera pour plus de commodité « clé d'authentification » dans la suite de la description.

La clé de masquage R et la clé d'authentification K sont générées lorsque le premier paquet de données du contenu diffusé est reçu dans le dispositif M. Elles sont également mémorisées temporairement à l'étape 404 dans une zone de mémoire sécurisée du dispositif M qui les effacera, comme on le verra ci-dessous, une fois que le contenu aura été transmis entièrement à un dispositif de présentation du domaine N2. L'étape 404 n'est donc pas mise en oeuvre lors de chaque réception d'un message LECM1 dans le module convertisseur. Les étapes suivantes par contre, sont mises en oeuvre pour chaque nouveau message LECM1 reçu.

A l'étape 405, le module convertisseur du dispositif M calcule un mot de contrôle masqué MCW en fonction du mot de contrôle en clair obtenu à l'étape 403 et de la clé de masquage R. De manière préférentielle, l'opération suivante est effectuée :

$$MCW = CW \oplus R;$$

où $\oplus$ représente l'opération « OU exclusif » (« XOR » en anglais).

Ensuite, à l'étape 406, le module convertisseur chiffre le mot de contrôle masqué MCW et la clé d'authentification K à l'aide de la clé symétrique $K'_C$ puis, à l'étape 407, il construit le message LECM2 qui contient :

$$E\{K_{N2}\}(K'_C) \mid LS \mid E\{K'_C\}(MCW|K) \mid \text{Champ d'intégrité},$$

avec « LS » correspondant au code « lecture seule » des informations « VCI » et où le Champ d'intégrité est calculé comme suit :

$$\text{Hash}\ (E\{K_{N2}\}(K'_C) \mid LS \mid MCW|K),$$

avec « Hash (x) » qui représente une fonction de hachage, c'est à dire une fonction mathématique qui transforme un ensemble de données d'entrée « x » en un ensemble de données « y » de taille fixe, souvent inférieure à la taille des données d'entrée, et représentatives des données d'entrées ; cette fonction est de plus une fonction à sens unique (« one way function » en anglais) c'est à dire que, connaissant « y », il est impossible de retrouver « x » tel que y= Hash (x). Préférentiellement, nous utilisons la fonction SHA-1 décrite dans le document « Secure Hash Standard, FIPS PUB 180-1, National Institute of Standard Technology, 1995 ».

Une fois le message LECM2 construit par le module convertisseur du dispositif M, il est transmis au module « Extract/Insert LECM » 211 qui l'insère dans le paquet de données à la place du message LECM1 initial.

A l'étape 408, le paquet de données modifié avec le message LECM2 est envoyé sur le bus 204 du réseau du domaine N2 en utilisant le canal de diffusion habituel du magnétoscope numérique 203. Ainsi, les dispositifs de présentation du domaine N2 peuvent avoir accès au contenu comme s'il avait été diffusé directement par le magnétoscope numérique 203.

On notera que le canal de diffusion utilisé est un des canaux isochrones du bus IEEE 1394, canal qui transporte habituellement les données compressées selon la norme MPEG 2 (ISO/IEC 13818-1).

Supposons que l'utilisateur veuille visualiser le contenu sur le dispositif de présentation 202 du domaine N2, c'est à dire sur le récepteur de télévision 220. Les paquets de données envoyés à l'étape 408 sont donc reçus par le récepteur de télévision numérique 220 et le module « unité LECM » 223 extrait les messages LECM2 pour les transmettre au module terminal 222 pour traitement.

Sur la figure 2, nous n'avons représenté qu'un seul dispositif de présentation dans le domaine N2 mais il est tout à fait possible qu'il y en ait plusieurs. Dans ce cas, ce n'est pas nécessairement le même dispositif de présentation qui effectue le chiffrement de la clé symétrique $K'_C$ avec la clé secrète du réseau $K_{N2}$, comme représenté à la figure 3, et qui reçoit les paquets de données diffusés par le dispositif M comme représenté à la figure 4.

Les étapes suivantes sont mises en oeuvre dans le module terminal 222 du dispositif de présentation 202.

Tout d'abord, à l'étape 409, le module terminal déchiffre le contenu du message LECM2. En premier lieu, il déchiffre $E\{K_{N2}\}(K'_C)$ avec la clé $K_{N2}$ pour obtenir la clé $K'_C$ avec laquelle il déchiffre $E\{K'_C\}(MCW|K)$ pour obtenir MCW|K.

Ensuite, à l'étape 410, une vérification de l'intégrité du message LECM2 est effectuée en calculant:

$$\text{Hash}\ (E\{K_{N2}\}(K'_C) \mid LS \mid MCW|K)$$

à partir des données déchiffrées ci-dessus et en comparant ce résultat au champ d'intégrité du message LECM2.

Si les deux sont identiques, alors le message LECM2 est considéré comme valide et le procédé se poursuit ; sinon le procédé est arrêté. On peut prévoir dans ce dernier cas d'afficher un message d'avertissement à destination de l'utilisateur.

Lorsque le message LECM2 est valide, le module terminal détecte ensuite à l'étape 411, en listant le champ VCI = « LS », qu'il s'agit d'un contenu de type « lecture seule ».

A l'étape suivante 412, dans le but d'authentifier le dispositif M qui a envoyé le paquet de données sur le réseau, le module terminal 222 génère un nombre aléatoire $R_i$ puis le dispositif de présentation 202 l'envoie au dispositif M (étape 413) en utilisant le canal asynchrone du bus 204 par lequel transitent habituellement les messages de commande (l'envoi par le canal asynchrone du bus 204 est représenté par une flèche en pointillés à la figure 4).

A l'étape 414, lorsque le dispositif M reçoit le nombre $R_i$, il effectue le calcul suivant (effectué par le module convertisseur) :

$$H_i = MAC_K(R_i),$$

où « $MAC_K(x)$ » représente un « Message Authentication Code » (ou « Code d'Authentification de Message » en français) du message x utilisant une clé K. On pourra se référer pour plus de détails sur les « MAC » à l'ouvrage *« Handbook of applied cryptography, Alfred J. Menezes, Paul C. van Oorschot, . Scott A. Vanstone, 1997, page 325* ».

On utilisera de préférence pour le calcul de $H_i$ la fonction HMAC-SHA-1, décrite notamment dans la publication « *Keyed-Hashing for Message Authentication, RFC 2104, Krawczyk, Bellare and Canneti, 1997* » disponible à l'adresse Internet suivante *http://www.ietf.org/rfc/rfc2104.txt.*

A l'étape suivante 415, le dispositif M envoie, par le canal asynchrone du bus 204, le résultat du calcul $H_i = MAC_K(R_i)$ ainsi que la clé de masquage R au dispositif de présentation 202.

Le module terminal 222 vérifie alors, à l'étape 416, la validité du nombre $H_i$ reçu en effectuant le calcul suivant :

$H'_i = MAC_K(R_i)$ en utilisant le nombre $R_i$ généré à l'étape 412 et la clé d'authentification K obtenue en déchiffrant le message LECM2 à l'étape 409.

Si $H'_i$ est différent du nombre $H_i$ reçu du dispositif M, alors le procédé est arrêté. Un message est par exemple affiché à l'attention de l'utilisateur pour le prévenir que le contenu ne peut être visualisé (ou écouté).

Si en revanche $H'_i = H_i$ alors le dispositif M est authentifié. Dans ce cas, le module terminal 222 utilise la clé de masquage R reçue pour retrouver le mot de contrôle CW à partir de MCW en effectuant (étape 417) l'opération :

$$MCW \oplus R = CW \oplus R \oplus R = CW.$$

Le mot de contrôle déchiffré CW peut ensuite être transmis au module « Unité LECM » 223 qui est alors en mesure de désembrouiller les données du paquet reçu à l'étape 408 avec le mot de contrôle CW (étape 418) pour qu'elles soient présentées à l'utilisateur.

Les étapes 409, 410, 417 et 418 sont répétées pour chaque paquet de données formant le contenu transmis du dispositif M vers le dispositif de présentation 202. Ensuite, à l'étape suivante 419, le dispositif de présentation 202 efface de sa mémoire la clé de masquage R et la clé d'authentification K qu'il avait mémorisées temporairement pour effectuer les calculs ci-dessus.

Une fois que tous les paquets de données formant le contenu ont été transférés du dispositif M au dispositif de présentation 202, la clé de masquage R et la clé d'authentification K sont immédiatement effacées, à l'étape 420, de la mémoire du dispositif M de sorte qu'il n'est plus possible de transmettre à nouveau ces données à un dispositif de présentation du domaine N2 pour une relecture éventuelle du contenu. Par conséquent, même si l'utilisateur a enregistré les paquets de données diffusés sur le réseau à l'étape 408, il ne pourra pas les relire car les clés R et K auront été effacées des mémoires du dispositif M et du dispositif de présentation 202.

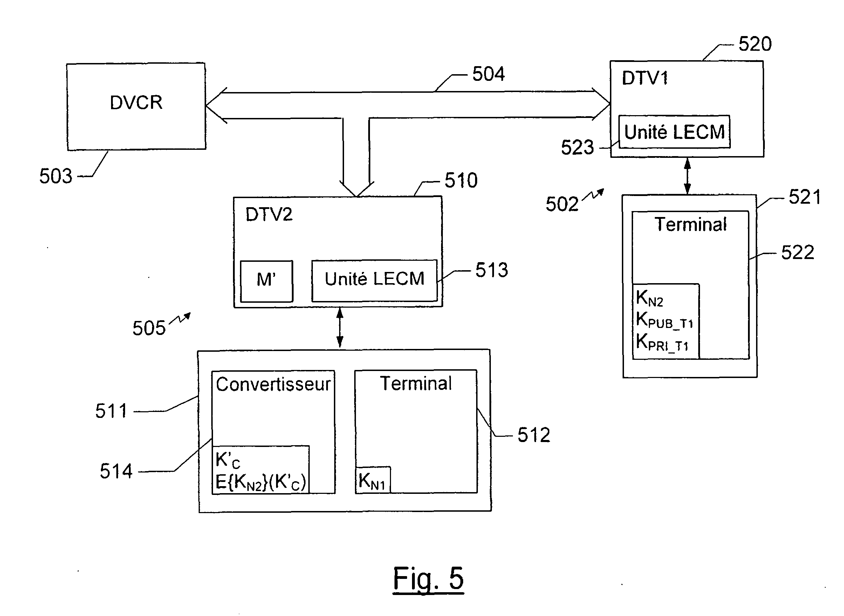

La figure 5 illustre un second mode de réalisation de l'invention permettant de convertir un contenu enregistré comme « copie privée » dans un domaine N1 en un contenu de type « lecture seule » pour un domaine N2.

Sur la figure 5, nous avons représenté schématiquement le réseau domestique numérique d'un domaine N2 comprenant un bus numérique 504 sur lequel sont connectés un magnétoscope numérique 503, un premier dispositif de présentation 502 et un second dispositif de présentation 505.

Le premier dispositif de présentation 502 comprend un récepteur de télévision DTV1 520 comportant un module « Unité LECM » 523 et une carte à puce 521 comportant un module terminal 522.

Dans ce mode de réalisation, le dispositif M réalisant la conversion du contenu pour le domaine N2 est mis en oeuvre par une carte à puce 511, comportant un module terminal 512 et un module convertisseur 514 (nous l'appellerons dans la suite carte « terminal/convertisseur ») qui est insérée, dans le second dispositif de présentation 505, à la place d'une carte à puce contenant le module terminal du dispositif de présentation 505 qui s'y trouve normalement (c'est à dire lorsque l'on n'a pas besoin de lire sur le domaine N2 un contenu enregistré dans le domaine N1). Le dispositif de présentation 505 comprend également un récepteur de télévision numérique DTV2 510 qui contient un module « Unité LECM » 513 ainsi qu'un module supplémentaire que nous appellerons M' qui est capable d'insérer des messages LECM dans des paquets de données et de diffuser des paquets de données sur le réseau. Ces fonctions ne sont en effet pas mises en oeuvre classiquement dans un dispositif de présentation.

Le fonctionnement de ce mode de réalisation est similaire à ce qui a été décrit en liaison avec les figures 2 à 4.

Dans un premier temps, la carte terminal/convertisseur 511 doit être initialisée dans le domaine N1 pour recevoir la clé secrète $K_{N1}$. Elle est par exemple insérée à la place d'une carte contenant un module terminal classique (appelée dans la suite « carte terminal ») d'un dispositif de présentation en tant que module terminal « vierge », reçoit la clé $K_{N1}$ du module terminal « géniteur » du réseau du domaine N1, puis devient « stérile ».

La carte terminal/convertisseur 511 peut ensuite être raccordée au domaine N2 en étant insérée à la place de la carte terminal dans un dispositif de présentation 505 particulier comprenant un module M' précité. On peut prévoir que l'utilisateur indique, par l'intermédiaire de l'interface utilisateur du récepteur de télévision 510, qu'il s'agit d'une carte spéciale pour ne pas générer une situation de blocage du dispositif de présentation 505 car il ne possède plus la clé secrète du domaine $K_{N2}$ (contenue dans la carte terminal qui est normalement insérée dans le récepteur de télévision 510).

Ensuite, le module convertisseur 514 génère une clé symétrique $K'_C$ et il la fait chiffrer par un dispositif de présentation du domaine N2, par exemple par le dispositif 502, pour obtenir $E\{K_{N2}\}(K'_C)$, en mettant en oeuvre les mêmes étapes que celles illustrées à la figure 3.

Le contenu enregistré sur le domaine N1 peut alors être diffusé du magnétoscope numérique 503 vers le dispositif de présentation 505 et la suite du procédé se déroule de la même manière que le procédé illustré à la figure 4, le dispositif de présentation 505 remplaçant le dispositif M et le dispositif de présentation 502 remplaçant le dispositif de présentation 202.

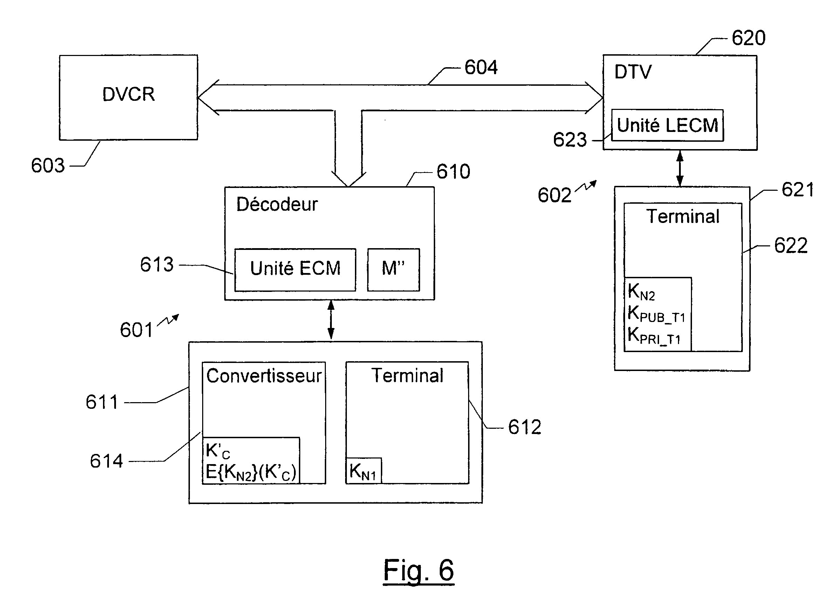

La figure 6 illustre un troisième mode de réalisation de l'invention permettant de convertir un contenu enregistré comme « copie privée » dans un domaine N1 en un contenu de type « lecture seule » pour un domaine N2.

Sur la figure 6, nous avons représenté schématiquement le réseau domestique numérique d'un domaine N2 comprenant un bus numérique 604 sur lequel sont connectés un magnétoscope numérique 603, un dispositif source 601 et un dispositif de présentation 602.

Le dispositif de présentation 602 comprend un récepteur de télévision DTV 620 comportant un module « Unité LECM » 623 et une carte à puce 621 comportant un module terminal 622.

Dans ce mode de réalisation, le dispositif M réalisant la conversion du contenu pour le domaine N2 est mis en oeuvre par une carte à puce 611, comportant un module terminal 612 et un module convertisseur 614 (que nous appellerons aussi carte « terminal/convertisseur » dans la suite) qui est insérée, dans le dispositif source 601, à la place d'une carte à puce contenant le module convertisseur du dispositif source qui s'y trouve normalement. Le dispositif source 601 comprend également un décodeur numérique 610 qui contient un module « Unité ECM » 613 ainsi qu'un module supplémentaire que nous appellerons M" qui est capable d'extraire des messages LECM des paquets de données reçus. Cette fonction n'est en effet pas mise en oeuvre classiquement dans un dispositif source.

Le fonctionnement de ce mode de réalisation est similaire à celui des deux modes de réalisation décrits précédemment.

Dans un premier temps, la carte terminal/convertisseur 611 doit être initialisée dans le domaine N1 pour recevoir la clé secrète $K_{N1}$. Ceci est effectué de la même manière que dans le second mode de réalisation décrit ci-dessus.

La carte terminal/convertisseur 611 peut ensuite être raccordée au domaine N2 en étant insérée à la place de la carte convertisseur dans un dispositif source 601 particulier comprenant un module M" précité. Cette carte est reconnue par le dispositif source comme une carte convertisseur « spéciale » puisqu'elle possède un module terminal 612 au lieu d'un module d'accès conditionnel (tel le module CA 14 de la figure 1) ou un module de gestion des droits numériques (module DRM). Mais son fonctionnement est tout à fait similaire à celui d'une carte convertisseur classique.

Le module convertisseur 614 génère une clé symétrique $K'_C$ et il la fait chiffrer par un dispositif de présentation du domaine N2, par exemple par le dispositif 602, pour obtenir $E\{K_{N2}\}(K'_C)$, en mettant en oeuvre les mêmes étapes que celles illustrées à la figure 3.

Le contenu enregistré sur le domaine N1 est ensuite diffusé du magnétoscope numérique 603 vers le dispositif source 601. Les messages LECM1 sont extrait des paquets de donnés reçus par le module M" avant d'être transmis au module terminal 612, lequel déchiffre les mots de contrôle CW pour les transmettre au module convertisseur 614.

La suite du procédé se déroule de la même manière que le procédé illustré à la figure 4 (étapes 404 à 420), le dispositif source 601 remplaçant le dispositif M de la figure 4 et le dispositif de présentation 602 remplaçant le dispositif de présentation 202 de la figure 4.

L'invention ne se limite pas aux exemples de réalisation qui viennent d'être décrits. En particulier, elle s'applique également aux réseaux domestiques numériques dans lesquels les données (notamment les messages LECM) sont protégées à l'aide d'une paire de clés asymétriques spécifique au domaine auquel appartient le réseau, la clé publique du réseau étant contenue dans les dispositifs sources pour chiffrer les données et la clé privée étant contenue dans les dispositifs de présentation pour déchiffrer les données. Dans ce cas, le dispositif M ou la carte terminal/convertisseur doivent contenir, après la phase d'initialisation, la clé privée du premier domaine et la clé publique du second domaine pour être en mesure de transformer les données chiffrées pour le premier domaine en données déchiffrables par un dispositif de présentation du second domaine.

## Revendications

1. Dispositif de traitement de données destiné à être raccordé à un réseau appartenant à un second domaine pour recevoir des données (LECM1) chiffrées selon un procédé de chiffrement propre à un premier domaine, comportant :

   - des moyens de réception, dans un réseau appartenant au second domaine, desdites données chiffrées ;
   - des moyens de génération (100) d'une première clé symétrique ($K'_C$) ;
   - des moyens de transmission (104) de ladite première clé symétrique (K'c) de façon sécurisée vers au moins un dispositif (202) du second domaine ;
   - des moyens de réception (202) dudit dispositif du second domaine du chiffrement ($E\{K_{N2}\}(K'_C)$) de ladite première clé symétrique à l'aide d'une seconde clé symétrique propre au second domaine ;
   - une mémoire pour contenir un premier secret (KN1) propre au premier domaine ;
   - des moyens de déchiffrement (210, 512, 612) desdites données chiffrées (LECM1) à l'aide dudit premier secret (KN1) pour obtenir des données déchiffrées (CW) ;
   - des moyens de chiffrement (210, 514, 614) desdites données déchiffrées (CW) à l'aide de la première clé symétrique (K'c),
   - une mémoire pour contenir la première clé symétrique (K'c) ainsi que le chiffrement ($E\{K_{N2}\}(K'_C)$) de ladite première clé symétrique à l'aide de la seconde clé symétrique ($K_{N2}$) ; et
   - des moyens de diffusion sur le réseau :

     - des données chiffrées ($E\{K'_C\}(CW)$) par lesdits moyens de chiffrement ; et
     - du chiffrement ($E\{K_{N2}\}(K'_C)$) de ladite première clé symétrique à l'aide de la seconde clé symétrique ($K_{N2}$).

2. Dispositif selon revendication 1, **caractérisé en ce que** le premier secret ($K_{N1}$) propre au premier domaine est une clé symétrique.

3. Dispositif selon revendication 2, **caractérisé en ce qu'**il comporte en outre

   - des moyens de génération d'une clé de masquage éphémère (R) ;
   - des moyens de masquage des données déchiffrées (CW) à l'aide de ladite clé de masquage (R) pour former des données masquées (MCW), lesdites données masquées étant chiffrées par les moyens de chiffrement (210, 514, 614) à l'aide de la première clé symétrique ($K'_c$) ; et
   - des moyens pour répondre à une opération d'authentification par un dispositif de présentation raccordé au réseau qui a au préalable reçu les données diffusées par lesdits moyens de diffusion, la réponse à l'opération d'authentification comprenant ladite clé de masquage éphémère (R).

4. Dispositif selon la revendication 3, **caractérisé en ce qu'**il comporte en outre des moyens de génération d'une clé éphémère d'authentification (K), ladite clé éphémère d'authentification étant chiffrée, avec lesdites données masquées (MCW), par les moyens de chiffrement (210, 514, 614) à l'aide de la première clé symétrique ($K'_c$) ; et les moyens de réponse à l'opération d'authentification calculant la réponse en fonction de ladite clé d'authentification et d'un nombre aléatoire ($R_i$) reçu dudit dispositif de présentation.

5. Dispositif selon l'une des revendications 2 à 4, **caractérisé en ce que** les données (LECM1) reçues par ledit dispositif contiennent des informations de contrôle de la copie de type copie privée autorisée ou une seule copie autorisée , **en ce que** le dispositif comprend des moyens pour remplacer lesdites informations de contrôle de la copie par d'autres informations de contrôle de la copie de type lecture seule ; et **en ce que** les données diffusées par ledit dispositif contiennent lesdites informations de contrôle de la copie de type lecture seule .

6. Procédé de transmission de données (LECM1), chiffrées selon un procédé de chiffrement utilisant un premier secret (KN1) propre à un premier domaine, dans un réseau appartenant à un second domaine, **caractérisé en ce qu'**il comporte les étapes consistant, pour un dispositif de traitement de données raccordé au réseau, à :

   (a) recevoir une première diffusion (401) des données chiffrées (LECM1) dans le réseau d'un dispositif de diffusion (203, 503, 603) du second domaine ;
   (b) déchiffrer lesdites données chiffrées à l'aide du premier secret (KN1) contenu dans le dispositif de traitement pour obtenir des données déchiffrées (CW) ;

     - générer (100) une première clé symétrique ($K'_C$) ;

- transmettre (104) ladite première clé symétrique (K'c) de façon sécurisée vers au moins un dispositif (202) du second domaine ;
- recevoir dudit dispositif (202) du second domaine le chiffrement (E{$K_{N2}$}($K'_C$)) de ladite première clé symétrique à l'aide d'une seconde clé symétrique propre au second domaine ;

(c) chiffrer les données déchiffrées (CW) à l'aide de la première clé symétrique (K'c) contenue dans le dispositif de traitement ; et
(d) effectuer une seconde diffusion (408) dans le réseau :

- des données chiffrées (E{K'c}(CW)) à l'étape (c) à l'aide de la première clé symétrique ; et
- du chiffrement (E {KN2} (K'c)) de ladite première clé symétrique à l'aide de la seconde clé symétrique (KN2) propre au second domaine.

**7.** Procédé selon la revendication 6, **caractérisé en ce que** l'étape (c) comprend les sous-étapes consistant, pour le dispositif de traitement, à :

- générer et mémoriser (404) une clé de masquage éphémère (R) ;
- masquer (405) les données déchiffrées (CW) à l'aide de ladite clé de masquage (R) pour former des données masquées (MCW) ; et
- chiffrer (406) lesdites données masquées à l'aide de la première clé symétrique ($K'_c$).

**8.** Procédé selon la revendication 7, **caractérisé en ce que** l'étape (c) comprend en outre les sous-étapes consistant, pour le dispositif de traitement, à :

- générer et mémoriser (404) une clé éphémère d'authentification (K) ; et
- chiffrer ladite clé éphémère d'authentification (K) et les données masquées (MCW) à l'aide de la première clé symétrique ($K'_c$);

et **en ce que** le procédé comprend en outre, après l'étape (d), une étape consistant à : répondre (415) à une opération d'authentification par un dispositif de présentation raccordé au réseau qui a au préalable reçu les données diffusées à l'étape (d), la réponse à l'opération d'authentification comprenant ladite clé de masquage éphémère (R).

**9.** Procédé selon la revendication 8, **caractérisé en ce que** la réponse à l'opération d'authentification est calculée (414) en fonction de ladite clé d'authentification (K) et d'un nombre aléatoire ($R_i$) reçu dudit dispositif de présentation.

**10.** Procédé selon l'une des revendications 6 à 9, **caractérisé en ce que** les données chiffrées transmises lors de la première diffusion contiennent des informations de contrôle de la copie de type copie privée autorisée ou une seule copie autorisée ; et **en ce que** le procédé comprend en outre, avant l'étape (d), une étape consistant à remplacer lesdites informations de contrôle de la copie par d'autres informations de contrôle de la copie de type lecture seule .

**11.** Procédé selon l'une des revendications 6 à 10, **caractérisé en ce qu'**il comporte en outre une phase d'initialisation du dispositif de traitement consistant à :

- raccorder ledit dispositif de traitement au réseau appartenant au premier domaine ; et
- recevoir dans ledit dispositif de traitement le secret ($K_{N1}$) propre au premier domaine, ledit secret étant transmis par un autre dispositif raccordé au réseau du premier domaine.

## Patentansprüche

**1.** Datenverarbeitungsvorrichtung, die dazu bestimmt ist, an ein Netzwerk angeschlossen zu werden, das zu einem zweiten Bereich gehört, um Daten (LECM1) zu empfangen, die nach einem einem ersten Bereich eigenen Verschlüsselungsverfahren verschlüsselt sind, mit:

- Mitteln für den Empfang der verschlüsselten Daten in einem Netzwerk, das zu dem zweiten Bereich gehört,
- Mitteln für die Erzeugung (100) eines ersten symmetrischen Schlüssels ($K'_C$),
- Mitteln für die gesicherte Übertragung (104) des ersten symmetrischen Schlüssels ($K'_c$) an mindestens eine Vorrichtung (202) des zweiten Bereichs,

- Mitteln für den Empfang (202) aus der Vorrichtung des zweiten Bereichs der Verschlüsselung ($E\{K_{N2}\}(K'_C)$) des ersten symmetrischen Schlüssels mit Hilfe eines zweiten, dem zweiten Bereich eigenen symmetrischen Schlüssels,
- einem Speicher, der dazu bestimmt ist, ein erstes, dem ersten Bereich eigenes Geheimnis ($K_{N1}$) zu enthalten,
- Mitteln für die Entschlüsselung (210, 512, 612) der verschlüsselten Daten (LECM1) mit Hilfe des ersten Geheimnisses ($K_{N1}$), um entschlüsselte Daten (CW) zu erhalten,
- Mitteln für die Verschlüsselung (210, 514, 614) des entschlüsselten Daten (CW) mit Hilfe des ersten symmetrischen Schlüssels ($K'_C$),
- einem Speicher, der dazu bestimmt ist, den ersten symmetrischen Schlüssel ($K'_c$) sowie die Verschlüsselung ($E\{K_{N2}\}$ ($K'_C$)) des ersten symmetrischen Schlüssels mit Hilfe des zweiten symmetrischen Schlüssels ($K_{N2}$) zu enthalten, und
- Mitteln, um über das Netzwerk

  - Daten ($E\{K'_C\}$ (CW)), die durch die Verschlüsselungsmittel verschlüsselt sind, und
  - die Verschlüsselung ($E\{K_{N2}\}$ ($K'_C$)) des ersten symmetrischen Schlüssels mit Hilfe des zweiten symmetrischen Schlüssels ($K_{N2}$)

zu senden.

**2.** Vorrichtung nach Anspruch 1, **dadurch gekennzeichnet, dass** das erste, dem ersten Bereich eigene Geheimnis ($K_{N1}$) ein symmetrischer Schlüssel ist.

**3.** Vorrichtung nach Anspruch 2, **dadurch gekennzeichnet, dass** sie ferner Folgendes umfasst:

- Mittel für die Erzeugung eines ephemären Anonymisierungsschlüssels (R),
- Mittel für die Anonymisierung der entschlüsselten Daten (CW) mit Hilfe des Anonymisierungsschlüssels (R) zur Bildung von anonymisierten Daten (MCW), wobei die anonymisierten Daten durch die Mittel zur Verschlüsselung (210, 514, 614) mit Hilfe des ersten symmetrischen Schlüssels ($K'_c$) verschlüsselt werden, und
- Mittel, um auf einen Vorgang der Authentifizierung durch eine an das Netzwerk angeschlossene Darstellungsvorrichtung zu antworten, die zuvor die über die Sendemittel gesendeten Daten empfangen hat, wobei die Antwort auf den Authentifizierungsvorgang den ephemären Anonymisierungsschlüssel (R) enthält.

**4.** Vorrichtung nach Anspruch 3, **dadurch gekennzeichnet, dass** sie ferner Mittel für die Erzeugung eines ephemären Authentifizierungsschlüssels (K) aufweist, wobei der ephemäre Authentifizierungsschlüssel mit den anonymisierten Daten (MCW) durch die Mittel für die Verschlüsselung (210, 514, 614) mit Hilfe des ersten symmetrischen Schlüssels ($K'_c$) verschlüsselt ist und die Mittel zur Beantwortung des Authentifizierungsvorgangs die Antwort in Abhängigkeit von dem Authentifizierungsschlüssel und von einer Zufallszahl ($R_i$) berechnen, die aus der Darstellungsvorrichtung empfangen worden ist.

**5.** Vorrichtung nach einem der Ansprüche 2 bis 4, **dadurch gekennzeichnet, dass** die von der Vorrichtung empfangenen Daten (LECM1) Informationen für die Prüfung der Kopie von der Art "erlaubte Privatkopie" oder "eine einzige erlaubte Kopie" enthalten, dass die Vorrichtung Mittel umfasst, um die Informationen für die Prüfung der Kopie durch andere Informationen für die Prüfung der Kopie von der Art "Read-Only-Kopie" zu ersetzen, und dass die von der Vorrichtung gesendeten Daten die Informationen für die Prüfung der Kopie von der Art "Read-Only-Kopie" enthalten.

**6.** Verfahren für die Übertragung von Daten (LECM1), die nach einem Verschlüsselungsverfahren verschlüsselt werden, bei dem ein erstes Geheimnis ($K_{N1}$) verwendet wird, das einem ersten Bereich eigen ist, in einem Netzwerk, das zu einem zweiten Bereich gehört, **dadurch gekennzeichnet, dass** es die Schritte umfasst, die für eine an das Netzwerk angeschlossene Datenverarbeitungsvorrichtung darin bestehen:

(a) eine erste Sendung (401) der verschlüsselten Daten (LECM1) in dem Netzwerk der einen Sendevorrichtung (203, 503, 603) des zweiten Bereichs zu empfangen,
(b) die verschlüsselten Daten mit Hilfe des ersten, in der Verarbeitungsvorrichtung enthaltenen Geheimnisses ($K_{N1}$) zu entschlüsseln, um entschlüsselte Daten (CW) zu erhalten,

  - einen ersten symmetrischen Schlüssel ($K'_c$) zu erzeugen,
  - den ersten symmetrischen Schlüssel ($K'_c$) an mindestens eine Vorrichtung (202) des zweiten Bereichs gesichert zu übertragen,

- aus der Vorrichtung (202) des zweiten Bereichs die Verschlüsselung ($E\{K_{N2}\}$ ($K'_C$)) des ersten symmetrischen Schlüssels mit Hilfe eines zweiten symmetrischen, dem zweiten Bereich eigenen Schlüssels zu empfangen,

(c) die entschlüsselten Daten (CW) mit Hilfe des ersten, in der Verarbeitungsvorrichtungen enthaltenen symmetrischen Schlüssels ($K'_c$) zu verschlüsseln und
(d) im Netzwerk eine zweite Sendung (408)

- der in Schritt (c) mit Hilfe des ersten symmetrischen Schlüssels verschlüsselten Daten ($E\{K'_C\}$ (CW)) und
- der Verschlüsselung ($E\{K_{N2}\}$ ($K'_C$)) des ersten symmetrischen Schlüssels mit Hilfe des zweiten, dem zweiten Bereich eigenen symmetrischen Schlüssels ($K_{N2}$) durchzuführen.

**7.** Verfahren nach Anspruch 6, **dadurch gekennzeichnet, dass** Schritt (c) die Unterschritte umfasst, die für die Verarbeitungsvorrichtung darin bestehen:

- einen ephemären Anonymisierungsschlüssel (R) zu erzeugen und zu speichern (404),
- die entschlüsselten Daten (CW) mit Hilfe des Anonymisierungsschlüssels (R) zu anonymisieren, um anonymisierte Daten (MCW) zu bilden, und
- die anonymisierten Daten mit Hilfe des ersten symmetrischen Schlüssels ($K'_c$) zu verschlüsseln (406).

**8.** Verfahren nach Anspruch 7, **dadurch gekennzeichnet, dass** Schritt (c) ferner die Unterschritte umfasst, die für die Verarbeitungsvorrichtung darin bestehen:

- einen ephemären Authentifizierungsschlüssel (K) zu erzeugen und zu speichern (404),
- den ephemären Authentifizierungsschlüssel (K) und die anonymisierten Daten (MCW) mit Hilfe des ersten symmetrischen Schlüssels ($K'_c$) zu verschlüsseln, und dass das Verfahren ferner nach Schritt (d) einen Schritt umfasst, der darin besteht, auf einen Vorgang der Authentifizierung durch eine an das Netzwerk angeschlossene Darstellungsvorrichtung zu antworten, die zuvor die in Schritt (d) gesendeten Daten empfangen hat, wobei die Antwort auf den Authentifizierungsvorgang den ephemären Anonymisierungsschlüssel (R) umfasst.

**9.** Verfahren nach Anspruch 8, **dadurch gekennzeichnet, dass** die Antwort auf den Authentifizierungsvorgang in Abhängigkeit von dem Authentifizierungsschlüssel (K) und von einer Zufallszahl ($R_i$) berechnet wird (414), die aus der Darstellungsvorrichtung empfangen worden ist.

**10.** Verfahren nach einem der Ansprüche 6 bis 9, **dadurch gekennzeichnet, dass** die bei der ersten Sendung übertragenen verschlüsselten Daten Informationen für die Prüfung der Kopie von der Art "erlaubte Privatkopie" oder "eine einzige erlaubte Kopie" enthalten, und dass das Verfahren ferner vor Schritt (d) einen Schritt umfasst, der darin besteht, die Informationen für die Prüfung der Kopie durch andere Informationen für die Prüfung der Kopie von der Art "Read-Only-Kopie" zu ersetzen.

**11.** Verfahren nach einem der Ansprüche 6 bis 10, **dadurch gekennzeichnet, dass** es ferner eine Phase der Initialisierung der Verarbeitungsvorrichtung aufweist, die darin besteht,

- die Verarbeitungsvorrichtung an das zum ersten Bereich gehörende Netzwerk anzuschließen und
- in der Verarbeitungsvorrichtung das dem ersten Bereich eigene Geheimnis ($K_{N1}$) zu empfangen, wobei das Geheimnis durch eine andere, an das Netzwerk des ersten Bereichs angeschlossene Vorrichtung übertragen wird.

## Claims

**1.** Data processing device intended to be connected to a network belonging to a second domain so as to receive data (LECM1) encrypted according to an encryption method specific to a first domain, comprising:

- means of receiving, in a network belonging to the second domain, said encrypted data;
- means of generating (100) a first symmetric key (K'c);
- means of transmitting (104) said first symmetric key (K'c) in a secure way to at least a device (202) of the second domain;

- means of receiving (202) from said device of the second domain the encryption (E{$K_{N2}$}(K'C)) of said first symmetric key with the aid of a second symmetric key specific to the second domain;
- a memory for containing a first secret ($K_{N1}$) specific to the first domain;
- means of decrypting (210, 512, 612) said encrypted data (LECM1) with the aid of said first secret ($K_{N1}$) to obtain decrypted data (CW);
- means of encrypting (210, 514, 614) said decrypted data (CW) with the aid of the first symmetric key (K'c);
- a memory for containing the first symmetric key (K'c) as well as the encryption (E{$K_{N2}$}(K'C)) of said first symmetric key with the aid of the second symmetric key ($K_{N2}$); and
- means of broadcasting on the network:

  - data (E{K'c}(CW)) encrypted by said means of encryption; and
  - the encryption (E{$K_{N2}$}(K'C)) of said first symmetric key with the aid of the second symmetric key ($K_{N2}$).

**2.** The device of claim 1, **characterized in that** the first secret ($K_{N1}$) specific to the first domain is a symmetric key.

**3.** The device of claim 2, **characterized in that** it further comprises

- means of generating an ephemeral masking key (R);
- means of masking decrypted data (CW) with the aid of said masking key (R) to form masked data (MCW), said masked data being encrypted by the means of encrypting (210, 514, 614) with the aid of the first symmetric key (K'c); and
- means for responding to an authentication operation by a presentation device connected to the network who previously has received the data broadcast by the means of broadcasting, the response to the authentication operation comprising said ephemeral masking key (R).

**4.** The device of claim 3, **characterized in that** it further comprises means of generating an ephemeral authentication key (K), said ephemeral authentication key being encrypted, with said masked data (MCW), by the means of encrypting (210, 514, 614) with the aid of the first symmetric key (K'c); and the means for responding to the authentication operation calculating the response as a function of said authentication key and a random number ($R_i$) received from said presentation device.

**5.** The device of any one of claims 2 to 4, **characterized in that** the data (LECM1) received by said device contain copy control information of the private copy authorized or single copy only authorized type,
**in that** the device comprises means for replacing said copy control information with other copy control information of the read only type;
and **in that** the data broadcast by said device contain said copy control information of the read only type.

**6.** Method of transmitting data (LECM1), encrypted according to a method of encryption using a first secret ($K_{N1}$) specific to a first domain, in a network belonging to a second domain, **characterized in that** it comprises the steps consisting, for a data processing device (203, 503, 603) connected to the network, of:

(a) receiving a first broadcast (401) of encrypted data (LECM1) in the network of a broadcasting device (20, 503, 603) of the second domain;
(b) decrypting said encrypted data with the aid of the first secret (KN1) contained in the data processing device to obtain decrypted data (CW);

  - generating (100) a first symmetric key (K'c);
  - transmitting (104) said first symmetric key (K'c) in a secure way towards at least one device (202) of the second domain;
  - receiving from said device (202) of the second domain the encryption (E{$K_{N21}$(K'c) of said first symmetric key with the aid of a second symmetric key specific to the second domain;

(c) encrypting the decrypted data (CW) with the aid of the first symmetric key (K'c) contained in the processing device; and
(d) performing a second transmission (408) in the network of:

  - the data encrypted (E{K'c}(CW)) in step (c) with the aid of the first symmetric key (K'c); and
  - the encryption (E{$K_{N2}$}(K'c) of said first symmetric key with the aid of the second symmetric key ($K_{N2}$)

specific to the second domain.

**7.** The method of claim 6, **characterized in that** step (c) comprises the substeps consisting, for the processing device, of:

- generating and storing (404) an ephemeral masking key (R);
- masking (405) the decrypted data (CW) with the aid of said masking key (R) to form masked data (MCW); and
- encrypting (406) said masked data with the aid of the first symmetric key (K'c).

**8.** The method of claim 7, **characterized in that** step (c) further comprises the substeps consisting, for the processing device, of:

- generating and storing (404) an ephemeral authentication key (K); and
- encrypting said ephemeral authentication key (K) and the masked data (MCW) with the aid of the first symmetric key (K'c);

and **in that** the method further comprises, after step (d), a step consisting in: responding (415) to an authentication operation by a presentation device connected to the network that previously has received the data broadcast in step (d), the response to the authentication operation comprising said ephemeral masking key (R).

**9.** The method of claim 8, **characterized in that** the response to the authentication operation is calculated (414) as a function of said authentication key (K) and a random number ($R_i$) received from said presentation device.

**10.** The method of any one of claims 6 to 9, **characterized in that** the encrypted data transmitted during the first broadcast contain copy control information of the private copy authorized or single copy only authorized type, and **in that** the method further comprises, before step (d), a step consisting in replacing said copy control information with other copy control information of the read only type.

**11.** The method of any one of claims 6 to 10, **characterized in that** further comprises an initialisation phase of the processing device consisting in:

- connecting said processing device to the network belonging to the first domain; and
- receiving in said processing device the secret ($K_{N1}$) specific to the first domain, said secret being transmitted by another device connected to the network of the first domain.

Données numériques
Décodeur
Unité ECM
10
13
1
CA
$K_F$
Convertisseur
$K_C$
$E\{K_{N1}\}(K_C)$
11
12
14
LECM
Données Embrouillées
40
4
DVCR
3
DTV
Unité LECM
20
23
2
Terminal
$K_{N1}$
21
22

Fig. 1

220
DTV
Unité LECM
223
221
222
Terminal
K_N2
K_PUB_T2
K_PRI_T2
202
204
DVCR
203
211
Extract/Insert LECM
212
UI
Terminal
K_N1
Convertisseur
K'_C
E{K_N2}(K'_C)
M
210

Fig. 2

Dispositif M
Dispositif de Présentation 202
Requête clé publique
101
$K_{PUB_T2}$
102
$E\{K_{PUB_T2}\}(K'_C)$
104
$E\{K_{N2}\}(K'_C)$
107
Génération $K'_C$ et mémorisation
100
Chiffrement $K'_C$ avec $K_{PUB_T2}$
103
Mémorisation $E\{K_{N2}\}(K'_C)$
108
Déchiffrement $E\{K_{PUB_T2}\}(K'_C)$ avec $K_{PRI_T2}$
105
Chiffrement $K'_C$ avec $K_{N2}$
106
t
t


Fig. 3

DVCR
203
Dispositif M
Dispositif de
Présentation 202
LECM1 | E{CW}(<données>)
401
Déchiffrement
E{K_N1}(K_C) avec K_N1
402
Déchiffrement
E{K_C}(CW) avec K_C
403
404
Génération K et R
Mémorisation K et R
405
MCW = f(CW,R)
Chiffrement MCW et K avec K'_C
406
Construction LECM2
407
LECM2 | E{CW}(<données>)
408
409
Déchiffrement LECM2
Vérification intégrité
LECM2
410
t
t
t

Fig. 4A

Dispositif M
Dispositif de Présentation 202
Détection contenu « lecture seule »
411
Génération $R_i$
412
$R_i$
413
$H_i = MAC_K(R_i)$
414
$H_i$ | R
415
416
Vérification $H_i$
Récupération CW à partir de MCW et R
417
Désembrouillage des données avec CW
418
Effacement K et R
419
Effacement K et R
420
t
t

Fig. 4B

520
DTV1
Unité LECM
523
521
522
Terminal
$K_{N2}$
$K_{PUB_T1}$
$K_{PRI_T1}$
502
504
510
DTV2
M'
Unité LECM
513
512
Terminal
$K_{N1}$
Convertisseur
$K'_C$
$E\{K_{N2}\}(K'_C)$
505
511
514
DVCR
503

Fig. 5

620
DTV
Unité LECM
623
621
622
Terminal
$K_{N2}$
$K_{PUB_T1}$
$K_{PRI_T1}$
602
604
610
Décodeur
Unité ECM
M''
613
612
Terminal
$K_{N1}$
Convertisseur
$K'_C$
$E\{K_{N2}\}(K'_C)$
601
611
614
DVCR
603

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 0105568
- FR 0015894, THOMSON
- US 6081601 A
- WO 0056068 A
- WO 0062505 A

### Littérature non-brevet citée dans la description

- **RIJNDAEL.** Proceedings from the first Advanced Encryption Standard Candidate Conference. National Institute of Standards and Technology, Août 1998
- Secure Hash Standard, FIPS PUB 180-1. National Institute of Standard Technology, 1995